# EUROPEAN PATENT SPECIFICATION

(11) **EP 1 755 789 B1**
(45) Date of publication and mention of the grant of the patent: **08.07.2015**
(21) Application number: 05713313.4
(22) Date of filing: 11.02.2005
(51) Int. Cl.: B05B 1/20, B05B 5/035, B05B 5/043, B05B 5/053, F16N 7/34

(54) **ELECTROSTATIC SPRAY ASSEMBLY**
ELEKTROSTATISCHE SPRAY-BAUGRUPPE
ASSEMBLAGE DE PULVERISATION ELECTROSTATIQUE

(30) Priority: 12.02.2004 US 544269 P
(43) Date of publication of application: 28.02.2007
(73) Proprietor: SPRAYING SYSTEMS CO., Wheaton, Illinois 60189-7900 (US)
(72) Inventor: MULJONO, Eric Budi, Derry, NH 03039 (US)
(74) Representative: Makovski, Priscilla Mary
(86) International application number: PCT/US2005/004289
(87) International publication number: WO 2005/079281

(56) References cited:
- WO-A1-88/10152
- GB-A- 1 569 707
- US-A- 4 703 891
- US-A- 4 703 891
- US-A- 6 003 794

## Description

### CROSS-REFERENCE TO RELATED PATENT APPLICATIONS

This patent application claims the benefit of U.S. Provisional Patent Application No. 60/544,269 filed on February 12, 2004.

### FIELD OF THE INVENTION

The present invention relates generally to spray nozzle assemblies, and more particularly, to electrostatic spray nozzle assemblies that electrostatically charge fluids discharging from spray nozzles to facilitate liquid particle breakdown and distribution.

### BACKGROUND OF THE INVENTION

Electrostatic spray nozzle assemblies are utilized for applying oil and other coating and lubricating fluids in various manufacturing processes. Electrostatic spray nozzle assemblies, such as shown in U.S. Patent 4,749,125, discharge a plurality of fluid flow streams which are electrostatically charged and atomized by means of a high voltage electrode with the assistance of a grounded induction bar for disposition onto items to be sprayed or coated, typically as they are conveyed past the spraying apparatus.

Heretofore, such electrostatic assembly spray nozzle assemblies have suffered from various operating and maintenance problems. For example, imprecise manufacture and assembly of such spray nozzles and charging electrodes can result in high voltage leakage that can significantly affect the operating efficiency of the spray operation. Fluid leakage problems also can adversely affect the spray distribution and lead to waste of costly spray liquids.

WO 88/10152 discloses a spray coating device in accordance with the preamble of claim 1 in which a ring surrounds and is radially spaced from a spray device. The ring carries a number of electrodes. Gas flowing across the ring the and electrodes transmits electrical charges from the electrodes to particles of atomized coating material emitted from the spray device downstream of the spray head of the spray device.

### OBJECTS AND SUMMARY OF THE INVENTION

According to the invention there is provided an electrostatic spraying assembly having all the features of claim 1.

It is an object of the present invention to provide an electrostatic spray nozzle assembly that is adapted for more efficient and reliable spraying of oils and other lubricating and coating fluids.

Another object is to provide an electrostatic spray nozzle assembly which includes electrostatic charging electrodes that are adapted for more precise manufacture and mounting within the nozzle assembly, and hence more efficient operation with reduced power consumption and increased life expectancy.

A further object is to provide an electrostatic spray nozzle assembly of the foregoing type which is operable for electrostatically charging a plurality of fluid flow streams for more uniformly coating or lubricating of items that are sprayed.

Still another object is to provide an electrostatic spray nozzle assembly of the above kind which is adapted for more effectively atomizing the fluid flow streams so as to produce a uniform fine particle distribution onto items being sprayed.

Still another object is to provide an electrostatic spray nozzle assembly that can have relatively large fluid passages that resist clogging and are easy to clean.

Still another object is to provide an electrostatic spray nozzle assembly that requires a relatively low voltage at the nozzle tip thereby improving safety and reducing the tendency of sparking.

Yet another object is to provide such an electrostatic spray nozzle assembly which is relative simple in construction and lends itself to economical manufacture.

Other objects and advantages of the invention will become apparent upon reading the following detailed description and upon reference to the drawings, in which:

### BRIEF DESCRIPTION OF THE DRAWINGS

Figure 1 is a perspective view of an illustrative spray nozzle assembly;
FIG. 2 is a partial vertical section view of the spray nozzle assembly shown in FIG. 1;
FIG. 3 is a perspective view of an electrode needled assembly utilized in the illustrated electrostatic spray nozzle assembly;
FIG. 4 is a perspective view of a housing block used in the illustrated spray nozzle assembly;
FIG. 5 is a perspective view of a cover plate used in the illustrated spray nozzle assembly;
FIG. 6 is a perspective view of an alternative electrostatic spray nozzle assembly;
FIG. 7 is a partial vertical section view of the spray nozzle assembly shown in FIG. 6;
FIG. 8 is a perspective view of the spray nozzle assembly shown in FIG. 6 with the cover and electrode assembly removed;
FIG. 9 is a perspective view, similar to FIG. 8, with the electrode inserted in the housing block;
FIG. 10 is a perspective view of an electrostatic spray nozzle assembly in accordance with the invention;
FIG. 11 is a vertical section view of the spray nozzle assembly shown in FIG. 10; and
FIG. 12 is a perspective view in partial section of an electrostatic spray nozzle assembly which includes a single electrode pin.

While the invention is susceptible of various modifications and alternative constructions, certain illustrated embodiments thereof have been shown in the drawings and will be described below in detail. It should be understood, however, that there is no intention to limit the invention to the specific forms disclosed, but on the contrary, the intention is to cover all modifications, alternative constructions and equivalents falling within the scope of the invention as defined by the claims.

### DETAILED DESCRIPTION OF PREFERRED EMBODIMENTS

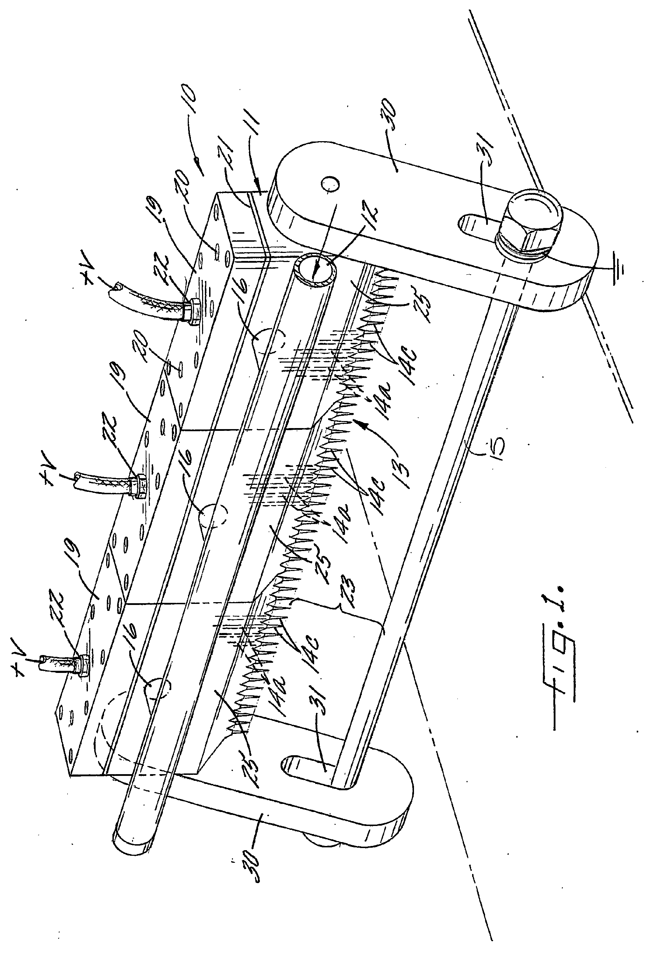

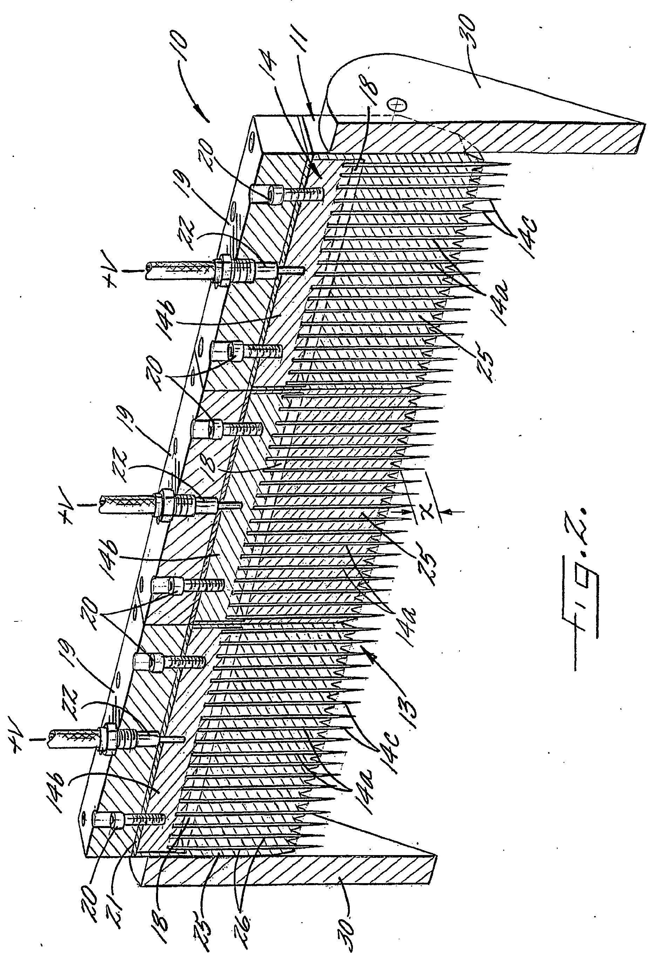

Referring now more particularly to the drawings, there is shown in FIGS. 1 and 2 an illustrative electrostatic spraying assembly 10, which is adapted for directing an elongated spray of oil or other lubricating or coating fluid on items conveyed below the spray assembly 10. The illustrative spray nozzle assembly 10 basically comprises an elongated housing 11 supported in adjacent relation to a fluid supply pipe 12, an electrode assembly 14 for charging fluid passing through and directed from a lower discharge end 13 of the housing 11, and an induction bar 15 disposed in parallel spaced relation to the discharge end of the housing 11 for enhancing liquid particle breakdown. The housing 11 in this case is supported by the fluid supply pipe 12 by means of a plurality of transversely directed conduit sections 16 that communicate between the fluid supply pipe 12 and fluid inlet ports 16a in a side of the housing.

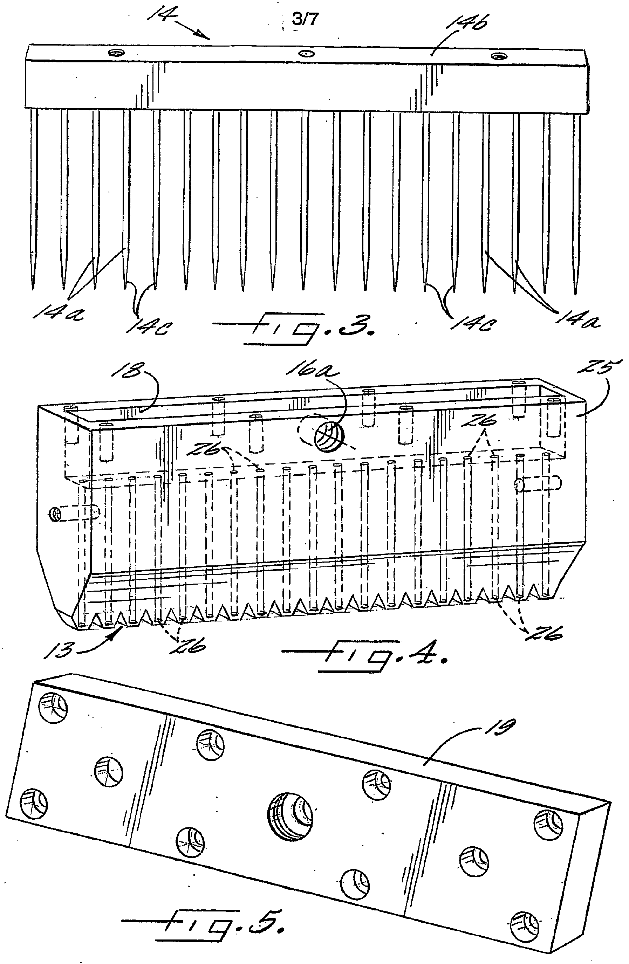

In accordance with an important aspect of the invention, the electrode assembly comprises a metallic block or header as well as a plurality of electrode elements in the form of pins each disposed within a respective fluid passageway communicating with the fluid inlet ports of the housing for charging fluid as it passes along the length of the pins and is discharged from the spray nozzle assembly. To this end, in the illustrated electrode 14 comprises a plurality of electrode pins 14a which are disposed in a longitudinally spaced array from a common header or strip 14b (see, e.g., FIGS. 2 and 3). Each electrode pin 14a, which in this instance is generally vertically oriented, is concentrically disposed in a respective fluid passageway 26 in the housing 11 (shown without the pins in FIG. 4) that is sized larger than the pin 14a such that an annular fluid flow passage is defined between the pin and the housing passage. The electrode 14 is made of a highly conductive metal material with the electrode pins 14a preferably being press fit within respective apertures within the electrode header 14b. The electrode header strip 14b in this case is disposed within a fluid inlet passage in the form of an elongated, longitudinal flow channel 18 of the housing 11 having a greater transverse width than the strip 14b (see, e.g., FIG. 2) for defining a longitudinal fluid flow passage communicating between the fluid inlet ports 16a of the housing and the annular fluid passages about the electrode pins 14a.

For enclosing the upper end of the elongated flow channel 18, the housing 11 has a cover 19 which is secured to the upper end of the housing 11 by appropriate fastening bolts with a sealing gasket 21 interposed there between. The header strip 14b of each electrode assembly 14 is retained in position within the flow channel 18 by bolts 20 which extend through the cover 19, and each electrode header strip 14b is connected to a high voltage line through a conventional banana coupling 22 (see FIG. 2).

The electrode pins 14a each terminate with a gradually tapered pointed end 14c which maximizes charging and ultimate liquid particle breakdown upon discharge from the spray assembly. While the theory of operation is not entirely understood, it is believed that the sharp points 14c of the pins 14a accumulate the electrical charge pursuant to a theory known as the Gauss theorem. The enhanced electrical charging of the fluid as it is directed along the pins 14a and discharged past the sharp pointed ends 14c further optimizes atomization and charging the fluid particles, which by virtue of their repelling nature, are more uniformly directed onto the items to be coated or lubricated. Hence, the pointed ends of the electrode pins 14a enhance the generation of smaller-sized fluid droplets, which is particularly important in airless electrostatic spraying systems.

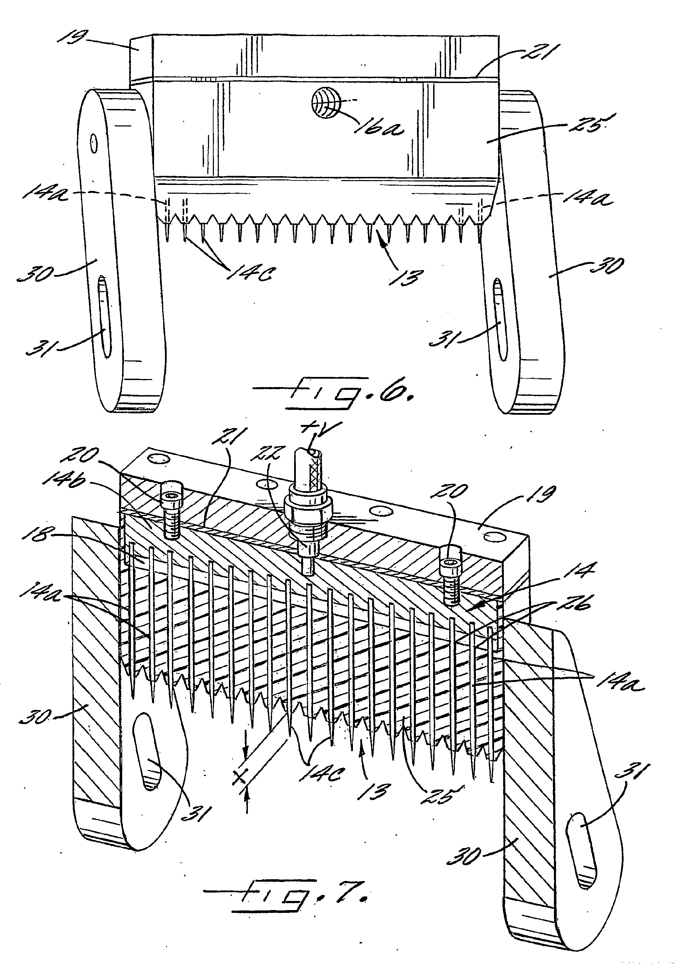

The electrode pins 14a preferably each protrude outwardly of the discharge end of the housing 11 a predetermined distance "x," such as about 1/4 inch (see FIG. 2). It has unexpectedly been found that the protruding electrode pin arrangement maximizes liquid flow rate through the spray nozzle assembly. Again, although the theory of operation is not entirely understood, it is believed that the greater surface area of pins over which the liquid travels facilitates liquid flow and discharge from the spray nozzle assembly. The increased contact with the electrode pins further enhances charging of the liquid and ultimate atomization. The housing 11 in this case is formed with a plurality of generally frustoconical exit points (see, e.g., FIGS. 2 and 7) through which the electrode pins 14a concentrically protrude for reducing the effect of surface tension on the liquid as it discharges from the housing about the electrode pins.

The electrode receiving body of the housing 11 has a one-piece block construction which facilitates precision concentric mounting of the electrode pins 14a within the housing passageways and which prevents fluid and high voltage leakage. The illustrated housing 11 includes a one-piece body 25 (see, e.g., FIG. 4) preferably machined from plastic stock, with the pin receiving flow passageways 26 being drilled in the body and the longitudinal channel 18 being milled. It will be understood by one skilled in art that by virtue of such one-piece housing block construction, there are no parting planes associated with the liquid flow passageways 26 typical of multi-part housings, nor fasteners for retaining a multi-part housing body in assembled condition at such parting planes. The resulting improved dimensional tolerances enhance even charging of the fluid as it travels along the perimeters of the elongated electrode pins 14a. As a result of the novel electrode design and arrangement, the electric spray nozzle assembly of the present invention has been found to have significantly improved operating efficiency over prior art spray devices of such type. For effecting spray performance comparable to such prior art spray devices, the subject electrostatic spray nozzle assembly has been found to be operable at 30 to 50 percent lower voltage requirements.

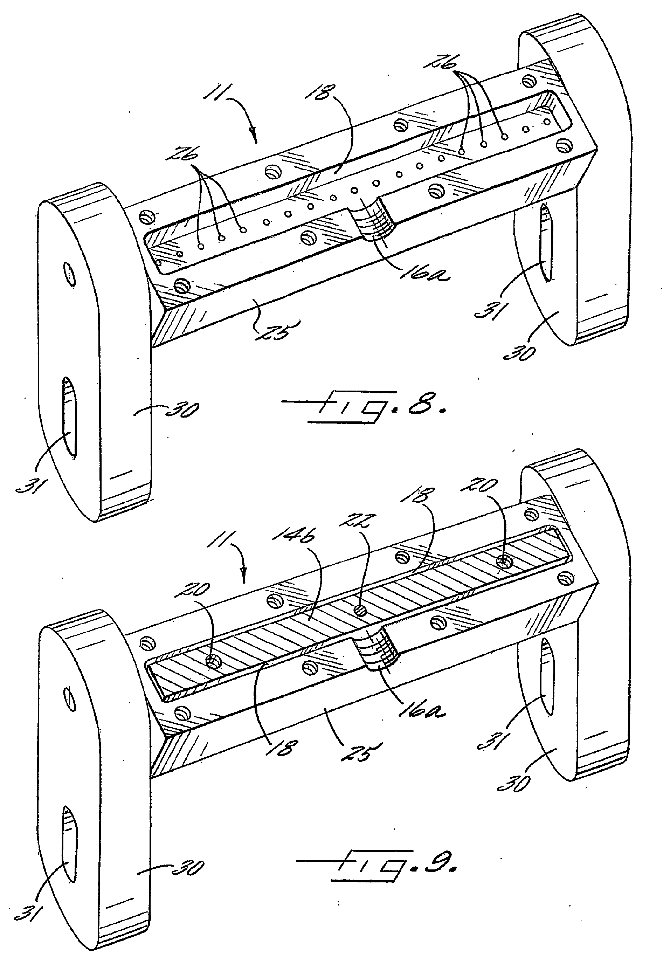

In the embodiment of FIGS. 1 and 2, it will be seen that the spray nozzle housing 11 includes three housing bodies 25 supported in a longitudinal array, each having a respective electrode assembly 14 comprising a header 14b and a plurality of pins 14a, and a respective cover 19. The fluid inlet port 16a of each electrode body 25 is coupled to the fluid supply pipe 12 by a respective conduit section 16. For purposes of illustration, the electrode assemblies are shown in partial section in FIG. 2 to depict the electrode pin arrangement. FIGS. 6-9 disclose a similar electrostatic spray nozzle assembly, but utilizing a single housing body 25, cover 19, and electrode assembly 14.

The induction bar 15 is mounted for selective positioning relative to the downstream ends of the electrode pins 14a for maximizing the effect of the electrical field therebetween on the discharging liquid, and hence, maximizing liquid particle breakdown. As shown in FIG. 1, the induction bar 15, in this case, is supported by elongated arms 30 fixed in depending angled relation to opposite ends of the housing 11. The induction rod 15 is selectively positionable within elongated slots 31 formed in the supporting arms 30 for effecting the desired spray characteristics.

In operation of the spray nozzle assembly 10, it will be seen that oil or other lubricating or coating fluid may be supplied through the liquid supply pipe 15 and communicate with housing inlet ports 16a through the conduit sections 16. The fluid entering the housing inlet ports will communicate through the longitudinal flow channel 18 to and through the depending flow passageways 26 in surrounding relation along the length of the electrode pins 14a, being charged along the entire length of travel. Upon discharge from the housing 11, the pointed ends 14c of the electrode pins 14a enhance charging of the discharging fluid, such that upon entering the electrical field 23 (see FIG. 1, for example) between the electrode pins 14a and the induction bar 15, the liquid is dispersed into fine particle spray with the repelling charges of the particles effecting substantially uniform distribution onto items passing below the spray nozzle assembly 10 to be coated.

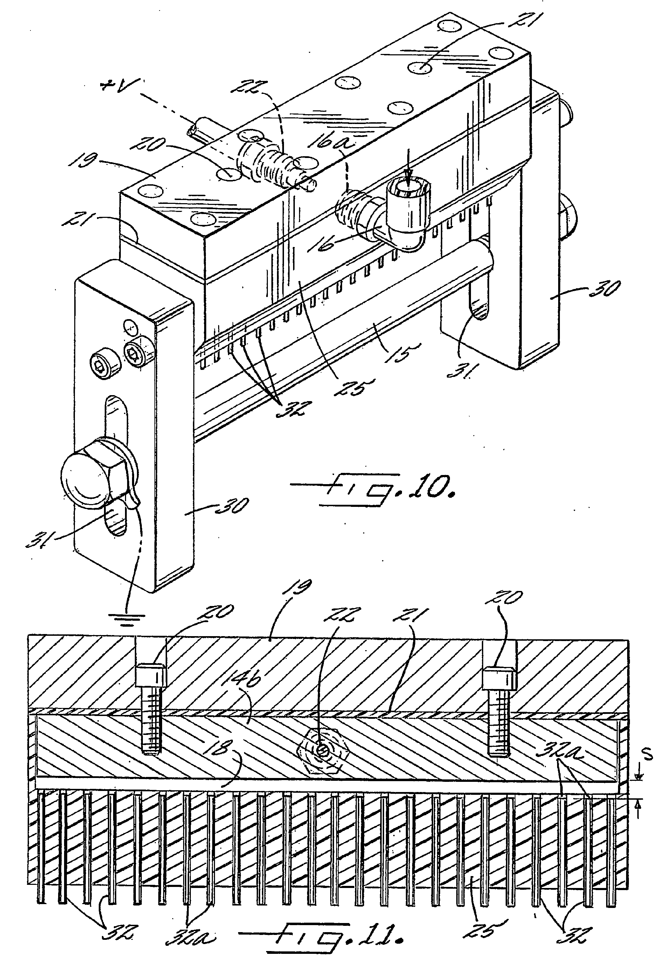

While in the embodiment illustrated in FIGS. 1-9, fluid is electrically charged by passage about the electrode pins 14a, alternatively, as depicted in FIGS. 10 and 11 and according to the present invention, fluid may be directed through the electrode itself. To this end, the electrode can include a plurality of electrode tubes 32 having flow passages extending therethrough. With the FIGS. 10 and 11 arrangement, fluid may be directed through the flow passages in the electrode tubes 32 and discharged from flow openings at their terminal ends 32a. As the fluid passes through the electrode tubes 32, it is charged such that when the fluid exits the tubes and enters the electrical field between the terminal ends 32a of the tubes and the induction bar 15, the fluid is dispersed into a fine particle spray. The use of the electrode tubes 32 provides relatively large flow passages that are more resistant to clogging and are easier to clean. Moreover, according to a further aspect of the invention, to enhance safety, the electrode tubes 32 can be arranged such that each tube terminates a small distance S (FIG. 11) from the electrode block or header 14b inside the longitudinal fluid inlet channel 18 of the housing. With this arrangement, the electrode tubes 32 will not be charged at a high electrical potential that could pose a safety hazard. Instead, the electrode tubes are charged inductively due to their proximity to the electrode header 14b. The inductive charging of the electrode tubes 32 will provide sufficient charging to provide the desired level of added charge to the fluid passing through the tubes 32. Accordingly, safety of the spray operation is increased without significant degradation in spray performance.

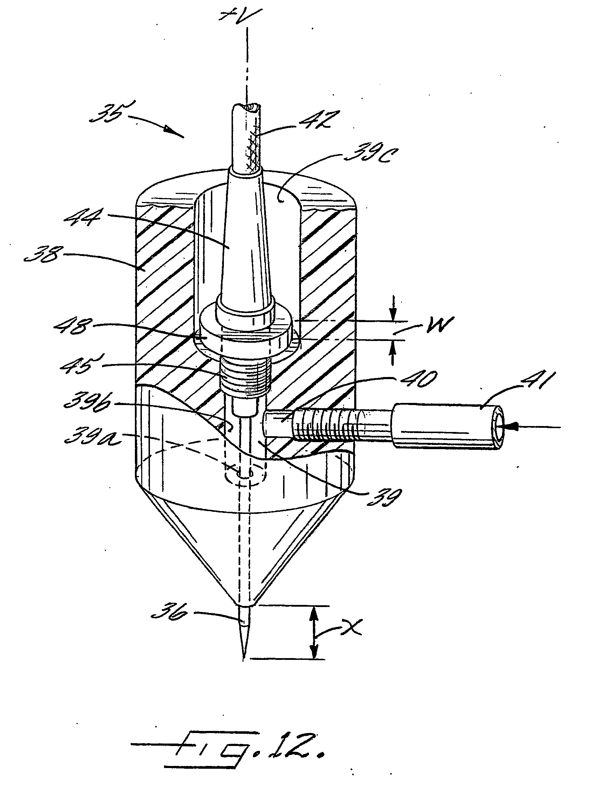

Referring now more particularly to FIG. 12 of the drawings, there is shown an alternative spray nozzle assembly 35, which utilizes a single electrode pin 36. The spray nozzle assembly 35 again includes a one-piece housing body 38, in this case having gun shape with an upstream cylindrical end portion and a downstream frustoconical end portion. The housing body 38, which again can be machined from plastic stock material, has longitudinal passageway 39 which includes a relatively small diameter downstream passageway section 39a within which the electrode pin 36 is concentrically mounted for defining an annular liquid flow passage similar to that described previously. The longitudinal passageway 39 includes an enlarged diameter passageway section 39b which communicates with a radial inlet port 40 to which a fluid supply conduit 41 is connected. The passageway 39 further includes an enlarged counter bore section 39c at the upstream end of the body 38 within which a high voltage line 42 connects with an upstream end of the electrode pin 36 through a banana coupling 44. The electrode pin 36 in this case has an enlarged threaded steam portion 45 to facilitate coupling with the high voltage supply line.

The electrode pin 36 in this case is selectively positionable within the passageway section 39a for the desired spray and liquid flow rate to be generated by the spray nozzle assembly. To this end, a washer configured shim 48 having a selectively determined longitudinal width "w" is interposed between the high voltage coupling and a downstream end wall of the enlarged counter bore section 39c for selectively locating the electrode pin 36 within the passageway 39a, and hence, selectively establishing the distance "x" the electrode pin 36 extends beyond the downstream end of the housing body 38. It will be seen that a thicker shim 48 will lead to reduced exposed needle surface at the tip of the nozzle body 38, and hence decrease the flow rate. Thinner shims 48 will enable a greater exposed needle surface area at the tip of the nozzle body and hence, increase the flow rate. In this manner, an optimum flow rate can be readily established through selection of desired shim width.

From the foregoing, it can be seen that the electrostatic spray nozzle assembly of the present invention is adapted for a more efficient and reliable spraying of oils and other lubricating and coating fluids. The spray nozzle assembly includes electrostatic charging electrodes that are adapted for more precision manufacture and mounting within the nozzle housing, and hence, more efficient operation with reduced power consumption and increased life expectancy. The spray nozzle assembly further is effective for more effectively optimizing fluid flow streams for uniform fine particle distribution onto the sprayed items.

## Claims

1. An electrostatic spraying assembly comprising:
a housing 11 having a fluid inlet 18 passage that is connectable to a fluid source and communicates with a plurality of discharge passageways 26 each of which extends through the housing to a downstream end at a discharge end of the housing 11, the housing 11 having a one piece construction and being made of an electrically insulative material;
an electrode assembly 14 including a plurality of elongate electrode elements 32 each of which is disposed in a respective one of the discharge passageways 26 in the housing, and
an electrode header 14b within said housing being electrically connectable to a voltage source **characterized by** said electrode elements comprising electrode tubes 32 each having an fluid passageway extending therethrough that is in fluid communication with the fluid inlet passage 18 in the housing 11 and a terminal end 32a from which fluid can be discharged, and each of the electrode tubes being arranged in spaced relation from the electrode header 14b such that the electrode tubes 32 are charged inductively by the electrode header 14b and in turn charge fluid passing through the electrode tubes 32 prior to discharge from said spraying assembly.

2. The electrostatic spraying assembly of claim 1 wherein each of the electrode elements 32 protrudes outwardly beyond the discharge end of the housing 11.

3. The electrostatic spraying assembly of claim 1 further including an induction element 15 supported adjacent to the discharge end of the housing 11.

4. The electrostatic spraying assembly of claim 3 wherein the induction element 15 is carried by support arms 30 such that the position of the induction element 15 relative to the discharge end of the housing 11 can be selectively adjusted.

5. The electrostatic spraying assembly of claim 1 wherein the electrode header 14b is arranged in the fluid inlet passage 18.

## Patentansprüche

1. Eine elektrostatische Spray-Baugruppe bestehend aus:
einem Gehäuse 11 mit einem Fluideinlassdurchgang 18, der an eine Flüssigkeitsquelle anschließbar ist und mit einer Vielzahl von Ablaufkanälen 26 verbunden ist, die sich durch das Gehäuse zu einer Auslaufseite des Gehäuses 11 erstrecken, wobei das Gehäuse 11 aus einem einzelnen Bauteil und elektrischem Isoliermaterial aufgebaut ist;
einer Elektroden-Baugruppe 14, die eine Vielzahl länglicher Elektrodenelemente 32 einschließt, die jeweils in einem der entsprechenden Ablaufkanäle 26 im Gehäuse angebracht sind, und
einem Elektrodenkopf 14b innerhalb des besagten Gehäuses, der elektrisch an eine Spannungsquelle anschließbar ist, dadurch charakterisiert, dass die besagten Elektrodenelemente die Elektrodenröhren 32 umfassen, die jeweils einen Fluiddurchgang aufweisen, der sich hindurch erstreckt und in Fluidverbindung mit dem Fluideinlassdurchgang 18 im Gehäuse 11 steht, und eine Endstelle 32a aufweisen, an der die Flüssigkeit austreten kann, jede der Elektrodenröhren ist dabei in einem bestimmten Abstand zum Elektrodenkopf 14b so angeordnet, dass die Elektrodenröhren 32 induktiv vom Elektrodenkopf 14b geladen werden und wiederum die Flüssigkeit, die durch die Elektrodenröhren 32 läuft, vor dem Austritt aus der besagten Spray-Baugruppe laden.

2. Die elektrostatische Spray-Baugruppe in Anspruch 1, wobei jedes der Elektrodenelemente 32 nach außen über die Auslaufseite des Gehäuses 11 hinausragt.

3. Die elektrostatische Spray-Baugruppe in Anspruch 1, die darüberhinaus ein Induktionselement 15 einschließt, das an der Auslaufseite des Gehäuses 11 angebracht ist.

4. Die elektrostatische Spray-Baugruppe in Anspruch 3, wobei das Induktionselement 15 von den Stützarmen 30 getragen wird, so dass die Position des Induktionselements 15 im Verhältnis zur Auslaufseite des Gehäuses 11 selektiv eingestellt werden kann.

5. Die elektrostatische Spray-Baugruppe in Anspruch 1, wobei der Elektrodenkopf 14b im Fluideinlassdurchgang 18 angebracht ist.

## Revendications

1. Un ensemble de pulvérisation électrostatique comprenant :
un logement 11 possédant un conduit d'admission de fluide 18 qui peut être raccordé à une source de fluide et communique avec une pluralité de conduits de décharge 26, chacun d'eux s'étendant au travers du logement vers une extrémité en aval au niveau d'une extrémité de décharge du logement 11, le logement 11 présentant une construction monobloc et étant composé d'un matériau électriquement isolant,
un ensemble électrode 14 comprenant une pluralité d'éléments d'électrode allongés 32, chacun d'eux étant disposé dans un conduit respectif des conduits de décharge 26 dans le logement, et
une tête d'électrode 14b à l'intérieur dudit logement qui peut être électriquement raccordée à une source de tension **caractérisée en ce que** lesdits éléments d'électrode comprennent des tubes d'électrode 32, chacun d'eux possédant un conduit de fluide s'étendant au travers de ceux-ci qui est en communication fluidique avec le conduit d'admission de fluide 18 dans le logement 11 et une extrémité terminale 32a à partir de laquelle un fluide peut être déchargé, et chacun des tubes d'électrode étant agencé dans une relation espacée à partir de la tête d'électrode 14b de sorte que les tubes d'électrode 32 soient chargés de manière inductive par la tête d'électrode 14b et à leur tour chargent un fluide passant au travers des tubes d'électrode 32 avant une décharge à partir dudit ensemble de pulvérisation.

2. L'ensemble de pulvérisation électrostatique selon la Revendication 1 où chacun des éléments d'électrode 32 fait saillie vers l'extérieur au-delà de l'extrémité de décharge du logement.

3. L'ensemble de pulvérisation électrostatique selon la Revendication 1 comprenant en outre un élément d'induction 15 soutenu de manière adjacente à l'extrémité de décharge du logement 11.

4. L'ensemble de pulvérisation électrostatique selon la Revendication 3 où l'élément d'induction 15 est soutenu par des bras de support 30 de sorte que la position de l'élément d'induction 15 par rapport à l'extrémité de décharge du logement 11 puisse être ajustée de manière sélective.

5. L'ensemble de pulvérisation électrostatique selon la Revendication 1 où la tête d'électrode 14b est agencée dans le conduit d'admission de fluide.
